# EUROPÄISCHE PATENTSCHRIFT

(11) **EP 0 794 236 B1**
(45) Veröffentlichungstag und Bekanntmachung des Hinweises auf die Patenterteilung: **29.03.2000**
(21) Anmeldenummer: 97102853.5
(22) Anmeldetag: 21.02.1997
(51) Int. Cl.: C09D 5/18, C09D 163/00, C08G 59/40, C08K 5/5333

(54) **Phosphormodifizierte Überzugsmassen, ein Verfahren zu ihrer Herstellung und ihre Verwendung**
Phosphorous-modified coating matters, a process for their production and utilisation thereof
Matières de revêtement modifiées par du phosphore, un procédé pour leur fabrication et leur utilisation

(30) Priorität: 06.03.1996 DE 19608611
(43) Veröffentlichungstag der Anmeldung: 10.09.1997
(73) Patentinhaber: Clariant GmbH, 65929 Frankfurt am Main (DE)
(72) Erfinder: Scholz, Guido, Dr., 84508 Burgkirchen (DE); Hörold, Sebastian, Dr., 50374 Erftstadt (DE); Pirig, Wolf-Dieter, 53879 Euskirchen (DE)

(56) Entgegenhaltungen:
- EP-A- 0 142 074
- EP-A- 0 735 119
- WO-A-94/21703
- US-A- 4 952 646

## Beschreibung

Die Erfindung betrifft aufblähbare, halogenfreie flammhemmende Überzugsmassen aus Epoxidharzen und Polyphosphor-/Polyphosphonsäureestem sowie einem Härter, die nach diesem Verfahren hergestellten Überzugsmassen und ihre Verwendung.

Überzugsmassen auf der Basis von Epoxidharzen sowie Epoxidharz-Formmassen sind seit längerem bekannt. Die als Ausgangsmaterialien eingesetzten Epoxidharze werden heute in großem Umfang zur Herstellung von Epoxidharz-Formmassen und zur Beschichtung mit hohem thermischem, mechanischem und elektrischem Eigenschaftsniveau sowie zur Herstellung von Laminaten eingesetzt.

Die verschiedenen Ausgangskomponenten (auch Epoxidharz-Komponente genannt) lassen sich unter Verwendung von Härtern (auch Härter-Komponente genannt), wie beispielsweise Carbonsäureanhydriden, Aminen, Phenolen oder Isocyanaten oder auch durch ionische Polymerisation zu den entsprechenden Überzugsmassen umsetzen.

Die Epoxidharze lassen sich im allgemeinen leicht verarbeiten, da sie im Ausgangszustand niedermolekular oder oligomer sind und bei normaler Verarbeitungstemperatur eine niedrige Viskosität aufweisen. Sie lassen sich somit leicht vergießen oder bei Tränk- und Imprägnierprozessen anwenden.

Gemäß den geforderten Anwendungsbereichen (z.B. Fußbodenbeschichtungen auf Ölbohrinseln, Parkhäusern, Flughäfen usw.) müssen solche Überzugsmassen flammwidrig eingestellt werden. Epoxidharze und Epoxidharz-Formmassen für solche Anwendungen, d.h. als Überzugsmasse, müssen also selbstverlöschend sein und dürfen den Brand nicht weiterleiten.

Epoxidharze und Epoxidharz-Formmassen werden heute mittels halogenhaltiger, insbesondere mittels bromhaltiger, aromatischer Komponenten flammwidrig eingestellt. Solche Komponenten enthalten häufig Antimontrioxid als Synergisten und werden in das Epoxidharz eingelagert. Beim Verschwelen oder Verbrennen dieser so beladenen Epoxidharze treten jedoch ökologisch oder toxikologisch sehr bedenkliche Zersetzungsprodukte auf.

So beschreibt die EP-A-0 142 074 eine Intumeszenz-Zusammensetzung, die unter anderem ein Epoxidharz sowie Phosphor-, Zink- oder Borverbindungen enthält, und die bei der Zersetzung unter großer Hitze eine Reihe von anorganischen und organischen, ökologisch und toxikologisch bedenklichen Produkten freisetzt.

Es besteht somit ein erheblicher Bedarf an Überzugsmassen auf Basis von Epoxidharzen, die eine hohe Flammwidrigkeit aufweisen, ohne daß sie halogenhaltige Komponenten oder andere, ökologisch oder toxikologisch bedenkliche Produkte enthalten oder solche bei der Zersetzung unter Hitzeeinwirkung freisetzen.

Es war daher Aufgabe der Erfindung, aufblähbare, flammhemmende Überzugsmassen zur Verfügung zu stellen, die eine hohe Flammwidrigkeit zeigen und bei der Zersetzung unter Hitzeeinwirkung keine ökologisch oder toxikologisch bedenklichen Produkte freisetzen. Darüber hinaus sollen die Überzugsmassen einfach und kostengünstig herstellbar sein und sich auf einfache Art und Weise anwenden lassen.

Die vorliegende Erfindung betrifft somit eine aufblähbare, halogenfreie flammhemmende Überzugsmasse der eingangs beschriebenen Art, dadurch gekennzeichnet, daß sie 75 bis 95 Gewichtsteile Epoxidharz sowie 5 bis 25 Gewichtsteile Polyphosphor-/Polyphosphonsäureester enthält und das Gesamtgewichtsverhältnis von Epoxidharz und Polyphosphor-/Polyphosphonsäureester zu Härter (1,1 bis 10) zu 1 beträgt.

Bevorzugt enthält die aufblähbare, halogenfreie flammhemmende Überzugsmasse bis zu 65 Gewichtsteile an weiteren Inhalts- und Füllstoffen.

Bevorzugt enthält die aufblähbare, halogenfreie flammhemmende Überzugsmasse 0,05 bis 10 Gew.-% Phosphor.

Besonders bevorzugt enthält die aufblähbare, halogenfreie flammhemmende Überzugsmasse 2 bis 7 Gew.-% Phosphor.

Die erfindungsgemäß eingesetzten halogenfreien Epoxidverbindungen (im folgenden auch Polyepoxidverbindungen genannt) können gesättigt oder ungesättigt sowie aliphatisch, cycloaliphatisch, aromatisch und/oder heterocyclisch sein. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen oder ähnliche. Es können auch Gemische verschiedener Polyepoxidverbindungen verwendet werden. Das mittlere Molekulargewicht Mₙ dieser Polyepoxidverbindungen kann bis zu etwa 9000 betragen, liegt jedoch im allgemeinen bei etwa 150 bis 4000.

Vorzugsweise handelt es sich bei diesen Polyepoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen, wie Phenol und/oder Kresole, mit Aldehyden, insbesondere Formaldehyd in Gegenwart saurer Katalysatoren), die man in bekannter Weise, beispielsweise durch Umsetzung der jeweiligen Polyole mit Epichlorhydrin, erhält.

Als mehrwertige Phenole kommen vor allem in Frage:
Resorcin, Hydrochinon, 2,2-Bis(4-hydroxy- phenyl)propan (Bisphenol A), Isomerengemische des Dihydroxydiphenylmethans (Bisphenol F), 4,4'-Dihydroxydiphenylcyclohexan,
4,4'-Dihydroxy-3,3'-dimethyldiphenylpropan, 4,4'-Dihydroxydiphenyl,
4,4'-Dihydroxybenzophenon, Bis(4-hydroxyphenyl)1,1-ethan,
1,1-Bis(4-hydroxyphenyl)isobutan, Bis(4-hydroxy-tert.-butylphenyl)2,2-propan,
Bis(2-hydroxynaphthyl)methan, 1,5-Dihydroxynaphthalin,
Tris(4-hydroxyphenyl)methan, Bis(4-hydroxyphenyl)ether.

Bisphenol A und Bisphenol F sind hierbei bevorzugt.

Auch die Polyglycidylether von mehrwertigen aliphatischen Alkoholen, wie etwa 1,4-Butandiol, 1,6-Hexandiol, Polyalkylenglykole, Glycerin, Trimethylolpropan, Bis(4-hydroxycyclohexyl)2,2-propan und Pentaerythrit sind als Polyepoxidverbindung geeignet.

Weiter kommen als Polyepoxidverbindungen auch (Poly)glycidester in Frage, die man erhält durch Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Phthal-, Isophthal-, Terephthal-, Tetrahydrophthal- oder Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Polyepoxidverbindungen, die die Epoxidgruppen in statistischer Verteilung über die Molekülkette enthalten und die durch Emulsions-Copolymerisation unter Verwendung von olefinisch ungesättigten, diese Epoxidgruppen enthaltenden Verbindungen hergestellt werden können, wie z.B. Glycidylester der Acryl- oder Methacrylsäure, können in manchen Fällen vorteilhaft eingesetzt werden.

Weitere verwendbare Polyepoxidverbindungen sind beispielsweise solche auf der Basis heterocyclischer Ringsysteme, wie z.B. Hydantoinepoxidharze, Triglycidylisocyanurat und/oder dessen Oligomeren, Triglycidyl-p-aminophenol, Triglycidyl-p-aminodiphenylether, Tetraglycidyldiaminodiphenylmethan, Tetraglycidyldiaminodiphenylether, Tetrakis(4-glycidoxyphenyl)ethan, Urazolepoxide, Uracilepoxide, oxazolidinonmodifizierte Epoxidharze sowie weiterhin Polyepoxide auf der Basis von aromatischen Aminen, wie Anilin, beispielsweise N,N-Diglycidylanilin, Diaminodiphenylmethan und N,N'-Dimethylamino-diphenylmethan oder -sulfon.

Weitere geeignete Polyepoxidverbindungen sind im "Handbook of Epoxy Resins" von Henry Lee und Kris Neville, McGraw-Hill Book Company, 1967, in der Monographie von Henry Lee "Epoxy Resins", American Chemical Society, 1970, in Wagner/Sarx, "Lackkunstharze", Carl Hanser Verlag (1971), 5. Auflage,174 ff., in der "Angew. Makromol. Chemie", Bd. 44 (1975), Seiten 151 bis 163, in der DE-OS 27 57 733 sowie in der EP 0 384 939 A1 beschrieben, auf die hiermit Bezug genommen wird.

Bevorzugt eingesetzte Polyepoxidverbindungen sind Bisglycidylether auf Basis von Bisphenol A, Bisphenol F und Bisphenol S (Umsetzungsprodukte dieser Bisphenole und Epichlor(halogen)hydrin) oder deren Oligomere, Polyglycidylether von Phenol/Formaldehyd- und/oder Kresol/Formaldehyd-Novolake sowie Diglycidylester der Phthal-, Isophthal-, Terephthal-, Tetrahydrophthal- und/oder Hexahydrophthalsäure sowie der Trimellithsäure, N-Glycidylverbindungen von aromatischen Aminen und heterocyclischen Stickstoffbasen, wie N,N-Diglycidylanilin, N,N,O-Triglycidyl-p-aminophenol, Triglycidylisocyanurat und N,N,N',N'-Tetraglycidylbis(p-aminophenyl)methan, Hydantoin-Epoxidharze und Aracid-Epoxidharze sowie Di- und Polyglycidylverbindungen von mehrwertigen aliphatischen Alkoholen, wie 1,4-Butandiol, Trimethylolpropan und Polyalkylenglykolen.

Des weiteren sind auch oxazolidinonmodifizierte Epoxidharze geeignet. Derartige Verbindungen sind bereits bekannt (Angew. Makromol. Chem., Bd. 44 (1975), Seiten 151 bis 163, sowie US-PS 3 334 110); beispielhaft sei hierfür das Umsetzungsprodukt von Bisphenol-A-diglycidylether mit Diphenylmethandiisocyanat (in Gegenwart eines geeigneten Beschleunigers) genannt.

Die Polyepoxidharze, wie sie für die vorliegende Erfindung verwendet werden, können bei der Herstellung der erfindungsgemäßen Überzugsmasse einzeln oder im Gemisch vorliegen.

Der Polyphosphor-/phosphonsäureester wird beispielsweise nach EP 0 409 308 B1 durch die Umsetzung eines Phosphonsäuretriesters mit Phosphorpentoxid (P₂O₅) hergestellt und genügt der allgemeinen Formel 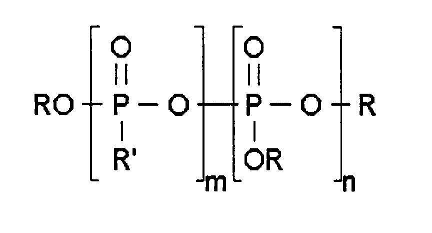 mit R, R' = Alkyl (bevorzugt Methyl, Ethyl, Propyl, Butyl) oder Halogenalkyl (etwa 2-Chlorethyl, 2-Chlor-iso-propyl, 2,3-Dichlor-iso-propyl) und (m + n) ≥ 4 (mittlere Kettenlänge).

Die Anordung der Phosphonsäureanhydridgruppen [RP(O)O] und Phosphorsäureanhydridgruppen [ROP(O)O] innerhalb der Oligomer- bzw. Polymerketten ist bevorzugt statistisch. Typischerweise liegt das molare Verhältnis von Phosphonsäure- zu Phosphorsäuregruppen in Abhängigkeit von der mittleren Kettenlänge bei 1 : 1 bis 1 : 2.

Diese Polyphosphorsäure-/phosphonsäureester zeichnen sich durch einen hohen Phosphorgehalt und damit gute Flammschutzeffektivität aus. Weiterhin sind sie formal als gemischte Polyanhydride von Phosphonsäure- und Phosphorsäureestern zu betrachten, die mit Epoxidgruppen unter Bildung von Phosphonsäurediestern und Phosphorsäuretriestern reagieren und damit, wie in EP 0 409 308 B1 beschrieben, als Anhydridhärter für Epoxidharze geeignet sind.

Nachteil der dort beschriebenen Alkylpolyphosphorsäureester und Alkylpolyphosphonsäure/phosphorsäureester ist deren hohe Reaktivität gegen Epoxidharze, die nach den Vermischen der Komponenten Härter und Harz nur wenige Sekunden im flüssigen und damit verarbeitbaren Zustand verbleiben. Oft tritt praktisch eine sofortige Erstarrung ein. Dies ist besonders für die Herstellung von Überzugsmassen von Nachteil, da damit eine zu kurze Topfzeit resultiert.

Weiterhin sind die Alkylpolyphosphorsäureester und Alkylpolyphosphonsäure/phosphorsäureester für den Anwender nicht einfach zu handhaben, da sie sehr hydrolyseempfindlich sind.

Erfindungsgemäß werden diese Nachteile dadurch überwunden, daß man beim Verfahren zur Herstellung von aufblähbaren, halogenfreien flammhemmenden Überzugsmassen aus Epoxidharzen und Polyphosphor-/Polyphosphonsäureestern sowie einem Härter, wie sie im Anspruch 1 definiert sind, in einem ersten Reaktionsschritt ein Epoxidharz mit dem Polyphosphor-/Polyphosphonsäureester umsetzt und das Reaktionsprodukt anschließend in einem zweiten Reaktionsschritt mit einem Härter in die Überzugsmasse überführt.

Durch diese Umsetzung des Epoxidharzes mit einer unterstöchiometrischen Menge an Polyphosphon-/Polyphosphorsäureester erhält man ein schmelzbares und/oder lösliches, phosphormodifiziertes Epoxidharz, welches lagerstabil ist (ggf. in Lösung) und sich einfach handhaben läßt. In einem zweiten Schritt kann es dann mit einem Härter in die erfindungsgemäße Überzugsmasse überführt werden.

Bevorzugt erfolgt erste Reaktionsschritt in einem Lösungsmittel.

Als aprotische, polare lösungsmittel können N-methylpyrrolidon, Dimethylformamid, Tetrahydrofuran, Dioxan, Dialkylether, Glykolether, Ketone und/oder Ester eingesetzt werden.

Als Lösungsmittel können auch halogenierte Kohlenwasserstoffe, aliphatische, cycloaliphatische und/oder aromatische Kohlenwasserstoffe, einzeln oder als Gemische, eingesetzt werden.

Bevorzugt erfolgt die Umsetzung im ersten Reaktionsschritt bei Temperaturen zwischen -10 bis +200 °C.

Vorzugsweise erfolgt die Umsetzung bei Temperaturen von 20 bis 100 °C.

Besonders bevorzugt erfolgt die Umsetzung bei Temperaturen von 50 bis 80 °C.

Die Umsetzung im zweiten Reaktionsschritt erfolgt bei Temperaturen von 0 bis 200 °C.

Bevorzugt erfolgt diese Umsetzung bei Temperaturen von 30 bis 150 °C.

Besonders bevorzugt erfolgt diese Umsetzung bei Temperaturen von 70 bis 120 °C.

Der Ausdruck "Härten", wie er hier gebraucht wird, bedeutet die Umwandlung der löslichen, schmelzbaren Polyepoxide in feste, unlösliche und unschmelzbare, dreidimensional vernetzte Produkte, in der Regel unter gleichzeitiger Formgebung, etwa zu Beschichtungen, Imprägnierungen und Verklebungen.

Als Härter können bespielsweise aliphatische, cycloaliphatische, aromatische und heterocyclische Amine, wie Bis(4-aminophenyl)methan, Anilin-Formaldehyd-Harze, Bis(4-aminophenyl)sulfon, Ethylendiamin, Propan-1,3-diamin, Hexamethylendiamin, Diethylentriamin, Triethylentetramin, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,5,5-trimethylcyclohexylamin (Isophorondiamin), Polyamidoamine, Polyphenole, wie Hydrochinon, Resorcin, 2,2-Bis(4-hydroxyphenyl)propan (Bisphenol A) und Phenol-Aldehyd-Harze, Polycarbonsäuren und deren Anhydride, wie zum Beispiel Phtalsäureanhydrid, Tetrahydrophtalsäureanhydrid, Hexahydrophtalsäureanhydrid, Pyromellithsäuredianhydrid eingesetzt werden. Darüber hinaus können auch katalytisch wirkende Härtungsmittel wie Cyanguanidine oder Friedel-Crafts-Katalysatoren wie Bortrifluorid verwendet werden.

Werden Amine als Härtungsmittel verwendet, so werden diese normalerweise in 0,75 bis 1,25 Äquivalenten pro Epoxidäquivalent eingesetzt. Bei Polycarbonsäuren oder deren Anhydriden werden 0,4 bis 1,1 Äquivalente pro Epoxidäquivalent verwendet.

Als weitere, additive Härterkomponente (d.h. zusätzlich zum eigentlichen Härter) können heterocyclische Polyamine mit Harnstoffgruppen eingesetzt werden. Auch andere aromatische Polyamine, wie etwa 4,4'-Diaminodiphenylmethan, 4,4'-Diaminodiphenylsulfon, und/oder andere heterocyclische Polyamine können mit einem Gewichtsanteil bis zu maximal 30 % im Härter-Gemisch eingesetzt werden.

Bevorzugt enthält die erfindungsgemäße Überzugsmasse als weitere Zusätze Beschleuniger, Füllstoffe, Pigmente, Flexibilisatoren und/oder Reaktiv-Verdünner.

Als Beschleuniger kommen vor allem Imidazolderivate, beispielsweise 2-Methylimidazol, 2-Phenylimidazol und 2-Heptadecylimidazol in Frage; weiterhin Phosphine, Metallseifen und Acetylacetonate.

Füllstoffe sind beispielsweise Quarz, Bolus Alba (China Clay), Kreide, Wollastonit, Talkum, Aluminiumoxid-trihydrat, Antimontrioxid.

Als Pigmente können Gasruß, Phthalocyanin-Pigmente und Metalloxide eingesetzt werden.

Zur Verbesserung der Zähigkeit der Überzugsmasse können als Flexibilisatoren Butadien-Acrylnitril-Kautschuk und andere aliphatische Polymere verwendet werden.

Als Reaktiv-Verdünner kommen beispielsweise mono- oder polyfunktionelle, niedermolekulare Alkohole, die mit Epichlorhydrin umgesetzt werden, in Frage.

Die Erfindung betrifft ebenfalls die Verwendung der vorgenannten Überzugsmassen zur Herstellung von Überzügen.

Bevorzugt werden die erfindungsgemäßen Überzugsmassen zum Beschichten von Fußböden, Wänden oder Formteilen verwendet.

Die erfindungsgemäßen Überzugsmassen eignen sich ebenfalls für die Beschichtung von Stahlträgern, Holz und holzähnliche Materialien, Kabeln und Rohren.

In den folgenden Beispielen werden Polyphosphonsäure/phosphorsäureester sowie die löslichen und/oder schmelzbaren Epoxidharze des ersten Reaktionsschrittes und anschließend flammhemmende Überzugsmassen hergestellt und ihre Wirksamkeit ermittelt. Die Prüfung der Isolierfähigkeit der unter Verwendung dieser Überzugsmassen hergestellten Intumeszenzanstriche erfolgte nach DIN 4102, Teil 2 (1977) in einem Kleinprüfstand gemäß DIN 4102, Teil 8 (1986), während die Prüfung der Oberflächengüte visuell vorgenommen wurde.

In den Beispielen wurden die folgenden Produkte eingesetzt:
^{®}Beckopox EP 140 (Hoechst AG, Frankfurt/Main)
   Es handelt sich hierbei um ein niedrigmolekulares Kondensationsprodukt aus Bisphenol-A und Epichlorhydrin mit einer Dichte von 1,16 g/ml (bei 25 °C), einem Epoxid-Equivalentgewicht von 180 - 190, einem EP-Wert von 0,53 - 0,55 und einer dynamischen Viskosität von 8000-11000 mPas (bei 25 °C).
^{®}Beckopox EH 625 (Hoechst AG, Frankfurt/Main)
   Es handelt sich hierbei um einen lösemittelfreien Epoxidharzhärter auf Basis eines modifizierten, aliphatischen Polyamins mit einem H-Equivalentgewicht von 73 und einer dynamischen Viskosität von 800 - 1200 mPas (bei 25 °C ).
®Kronos 2300 (Kronos Titan, Leverkusen)
   Hierbei handelt es sich um ein Aluminiumverbindungen oberflächenbehandeltes Rutil-Pigment mit einem TiO₂-Gehalt von ≥ 94%, einer Dichte von 4,1 g/cm³ und einer Ölzahl von 15-18 g/100 g.
Micro-Talkum 20 M 0 (Bassermann & Co, Mannheim)
   Hierbei handelt es sich um ein Talkum Pulver mit einem spezifischen Gewicht von 2,78 g/cm³, einer spezifischen Oberfläche von 7 m²/g und einem Schüttgewicht von 310 g/l.

Die Beispiele 1 bis 5 betreffen die Herstellung der Polyphosphonsäure/phosphorsäureester, die Beispiele 6 bis 11 die Herstellung der löslichen und/oder schmelzbaren Epoxidharze und die Beispiele 13 bis 20 (Beispiel 12 ist ein Vergleichsbeispiel nach dem Stand der Technik) die Herstellung der erfindungsgemäßen Überzüge.

### Beispiel 1

In einem 2 Liter 5-Halskolben, versehen mit Thermometer, Rückflußkühler, Pulvertrichter, Rührer und Gaseinleitrohr (N₂) werden 400 g (3,224 mol) Methanphosphonsäuredimethylester unter N₂-Atmosphäre vorgelegt. Unter Rühren und Kühlung werden innerhalb von 30 min 376,82 g (1,327 mol) P₄O₁₀ über den Pulvertrichter so zudosiert, daß die Reaktionstemperatur 60 °C nicht überschreitet. Nach beendeter Zugabe läßt man noch 5 h bei 70 °C nachreagieren. Man erhält 776,8 g eines Polymethanphosphonsäure/phosphorsäuremethylesters mit einer mittleren Kettenlänge von 15, einem mittleren Molekulargewicht von 1365,49 und einem Phosphorgehalt von 34,0 Gew.-%.

### Beispiel 2

Es wird wie in Beispiel 1 verfahren, jedoch werden 440 g (2,648 mol) Ethanphosphonsäurediethylester mit 322,15 g (1,135 mol) P₄O₁₀ umgesetzt.
Man erhält 762,15 g eines Polyethanphosphonsäure/phosphorsäureethylesters mit einer mittleren Kettenlänge von 19, einem mittleren Molekulargewicht von 2014,75 und einem Phosphorgehalt von 29,2 Gew.-%.

### Beispiel 3

Es wird wie in Beispiel 1 verfahren, jedoch werden 500 g (2,191 mol) Benzylphosphonsäurediethylester mit 272,07 g (0,958 mol) P₄O₁₀ umgesetzt.
Man erhält 772,07 g eines Polybenzylphosphonsäure/phosphorsäureethylesters mit einer mittleren Kettenlänge von 22, einem mittleren Molekulargewicht von 2819,41 und einem Phosphorgehalt von 24,2 Gew.-%.

### Beispiel 4

Es wird wie in Beispiel 1 verfahren, jedoch werden 510 g (2,105 mol) o-Methylbenzylphosphonsäurediethylester mit 251,62 g (0,886 mol) P₄O₁₀ umgesetzt.
Man erhält 761,62 g eines Poly-o-methylbenzylphosphonsäure/phosphorsäureethylesters mit einer mittleren Kettenlänge von 17, einem mittleren Molekulargewicht von 2291,28 und einem Phosphorgehalt von 23,0 Gew.-%.

### Beispiel 5

Es wird wie in Beispiel 1 verfahren, jedoch werden 530 g (2,118 mol) 1-Naphthylmethanphosphonsäuredimethylester mit 244,25 g (0,860 mol) P₄O₁₀ umgesetzt.
Man erhält 774,25 g eines Poly-1-naphthylmethanphosphonsäure/phosphorsäuremethylesters mit einer mittleren Kettenlänge von 14, einem mittleren Molekulargewicht von 1949,65 und einem Phosphorgehalt von 22,2 Gew.-%.

### Beispiel 6

In einem 500 ml Fünfhalskolben mit Rührer, Thermometer, Rückflußkühler, Tropftrichter und Gaseinleitungsrohr (N₂) werden 130 g ®Beckopox EP 140 vorgelegt. Bei 40 °C werden 16 g Polyphosphonsäure/phosphorsäureester nach Beispiel 1 innerhalb von 30 min zugetropft. Anschließend wird die Reaktionsmischung noch 4 h bei 100 °C gerührt. Man erhält ein bei erhöhter Temperatur fließfähiges, farbloses und transparentes Epoxidharz mit einem Epoxidwert von 3,8 mol/kg und einem Phosphorgehalt von 3,7 Gew.-%.

### Beispiel 7

In einem 500 ml Fünfhalskolben mit Rührer, Thermometer, Rückflußkühler, Tropftrichter und Gaseinleitungsrohr (N₂) werden 120 g ®Beckopox EP 140 und 50 ml Methylethylketon vorgelegt. Während 30 min werden 26 g Polyphosphonsäure/polyphosphorsäureester nach Beispiel 2 in 30 ml Methylethylketon dazugetropft. Die Reaktionstemperatur steigt auf 50 °C. Es wird noch 2 h gerührt. Man erhält eine 69 %ige Lösung des phosphormodifizierten Epoxidharzes mit einem Epoxidwert von 2,0 mol/kg. Der Phosphorgehalt des lösemittelfreien Harzes beträgt 5,2 Gew.-%.

### Beispiel 8

Es wird wie in Beispiel 7 verfahren, jedoch werden 120 g ®Beckopox EP 140 und 40 ml Methylethylketon vorgelegt und 15 g Polyphosphonsäure/polyphosphorsäureester nach Beispiel 2 in 25 ml Methylethylketon dazugetropft. Man erhält eine ca. 72 %ige Lösung des phosphormodifizierten Epoxidharzes mit einem Epoxidwert von 2,8 mol/kg. Der Phosphorgehalt des lösemittelfreien Harzes beträgt 3,2 Gew.-%.

### Beispiel 9

Es wird wie in Beispiel 7 verfahren, jedoch werden 120 g ®Beckopox EP 140 und 30 ml Methylethylketon vorgelegt und 20,5 g Polyphosphonsäure/polyphosphorsäureester nach Beispiel 3 in 25 ml Methylethylketon dazugetropft. Man erhält eine ca. 76 %ige Lösung des phosphormodifizierten Epoxidharzes mit einem Epoxidwert von 2,7 mol/kg. Der Phosphorgehalt des lösemittelfreien Harzes beträgt 3,5 Gew.-%.

### Beispiel 10

Es wird wie in Beispiel 7 verfahren, jedoch werden 100 g ®Beckopox EP 140 und 25 ml Methylethylketon vorgelegt und 22 g Polyphosphonsäure/polyphosphorsäureester nach Beispiel 4 in 25 ml Methylethylketon dazugetropft. Man erhält eine 75 %ige Lösung des phosphormodifizierten Epoxidharzes mit einem Epoxidwert von 2,4 mol/kg. Der Phosphorgehalt des lösemittelfreien Harzes beträgt 4,1 Gew.-%.

### Beispiel 11

Es wird wie in Beispiel 7 verfahren, jedoch werden 100 g ®Beckopox EP 140 und 25 ml Methylethylketon vorgelegt und 24 g Polyphosphonsäure/polyphosphorsäureester nach Beispiel 5 in 25 ml Methylethylketon dazugetropft. Man erhält eine 75 %ige Lösung des phosphormodifizierten Epoxidharzes mit einem Epoxidwert von 2,4 mol/kg. Der Phosphorgehalt des lösemittelfreien Harzes beträgt 4,3 Gew.-%.

### Beispiel 12 (Vergleichsbeispiel)

### Beispiel 12

In ein Rührgefäß wurden nacheinander 179,25 g (71,7 Gew.-%) ®Beckopox EP 140 und 70,75 g (28,3 Gew.-%) ®Beckopox EH 625 eingetragen und gründlich durchmischt.
Die resultierende Überzugsmasse wurde mit einer Rolle einseitig auf ein Stahlblech (St 37) von 280 x 280 x 6 mm³ aufgetragen. Die Masse härtete einen Tag bei 20 °C an der Luft aus, ihre Schichtdicke wurde mit 1,5 mm ermittelt.
Die Beschichtung war klar und die Oberfläche der Beschichtung glatt und rißfrei.

Die Brandprüfung des beschichteten Bleches gemäß DIN 4102 erfüllte die Anforderungen der Feuerwiderstandsklasse F 30 nicht. Die Beschichtung zeigte während dieser Prüfung kein Intumeszenzverhalten.

### Beispiel 13

Es wurde wie in Beispiel 12 verfahren, jedoch wurde die Überzugsmasse durch Mischen einer Lösung von 220 g des nach Beispiel 6 erhaltenen phosphormodifizierten Epoxidharzes in 160 ml Methylethylketon mit 61,0 g ®Beckopox EH 625 hergestellt. Die Schichtdicke wurde nach zweitägigem Trocknen bei 20 °C mit 1,7 mm ermittelt.
Die Beschichtung war klar und die Oberfläche des mit dieser Überzugsmasse versehenen Bleches glatt und rißfrei. Die Brandprüfung des beschichteten Bleches gemäß DIN 4102 ergab mindestens die Feuerwiderstandsklasse F 30. Die Beschichtung zeichnete sich bei dieser Prüfung durch ein sehr gutes Intumeszenzverhalten aus.

### Beispiel 14

Es wurde die gleiche Überzugsmasse wie in Beispiel 13 hergestellt, jedoch wurde von der Masse so viel auf das Blech aufgetragen, daß nach dem Aushärten die Schichtdicke mit 2,6 mm ermittelt wurde.
Die Beschichtung war klar und die Oberfläche des mit dieser Überzugsmasse versehenen Bleches war glatt und rißfrei. Die Brandprüfung des beschichteten Bleches gemäß DIN 4102 ergab die Feuerwiderstandsklasse F 60. Die Beschichtung zeichnete sich bei dieser Prüfung durch ein sehr gutes Intumeszenzverhalten aus.

### Beispiel 15

Es wurde die gleiche Überzugsmasse wie in Beispiel 13 hergestellt, jedoch wurde von der Masse so viel auf das Blech aufgetragen, daß nach dem Aushärten die Schichtdicke mit 7 mm ermittelt wurde.
Die Beschichtung war klar und die Oberfläche des mit dieser Überzugsmasse versehenen Bleches war glatt und rißfrei. Die Brandprüfung des beschichteten Bleches gemäß DIN 4102 ergab die Feuerwiderstandsklasse F 60. Die Beschichtung zeichnete sich bei dieser Prüfung durch ein sehr gutes Intumeszenzverhalten aus.

### Beispiel 16

Es wurde wie in Beispiel 12 verfahren, jedoch wurde die Überzugsmasse durch Mischen von 230 g einer nach Beispiel 7 erhaltenen Epoxidharz-Lösung mit 33,6 g ®Beckopox EH 625 hergestellt. Die Schichtdicke wurde nach zweitägigem Trocknen bei 20 °C mit 1,7 mm ermittelt.
Die Beschichtung war klar und die Oberfläche des mit dieser Überzugsmasse versehenen Bleches glatt und rißfrei. Die Brandprüfung des beschichteten Bleches gemäß DIN 4102 ergab mindestens die Feuerwiderstandsklasse F 30. Die Beschichtung zeichnete sich bei dieser Prüfung durch ein sehr gutes Intumeszenzverhalten aus.

### Beispiel 17

Es wurde wie in Beispiel 12 verfahren, jedoch wurde die Überzugsmasse durch Mischen von 210 g einer nach Beispiel 8 erhaltenen Epoxidharz-Lösung mit 42,9 g ®Beckopox EH 625 hergestellt. Die Schichtdicke wurde nach zweitägigem Trocknen bei 20 °C mit 1,6 mm ermittelt.
Die Beschichtung war klar und die Oberfläche des mit dieser Überzugsmasse versehenen Bleches glatt und rißfrei. Die Brandprüfung des beschichteten Bleches gemäß DIN 4102 ergab mindestens die Feuerwiderstandsklasse F 30. Die Beschichtung zeichnete sich bei dieser Prüfung durch ein sehr gutes Intumeszenzverhalten aus.

### Beispiel 18

Es wurde wie in Beispiel 12 verfahren, jedoch wurde die Überzugsmasse durch Mischen von 210 g einer nach Beispiel 9 erhaltenen Epoxidharz-Lösung mit 41,4 g ®Beckopox EH 625 hergestellt. Die Schichtdicke wurde nach zweitägigem Trocknen bei 20 °C mit 1,7 mm ermittelt.
Die Beschichtung war klar und die Oberfläche des mit dieser Überzugsmasse versehenen Bleches glatt und rißfrei. Die Brandprüfung des beschichteten Bleches gemäß DIN 4102 ergab mindestens die Feuerwiderstandsklasse F 30. Die Beschichtung zeichnete sich bei dieser Prüfung durch ein sehr gutes Intumeszenzverhalten aus.

### Beispiel 19

Es wurde wie in Beispiel 12 verfahren, jedoch wurde die Überzugsmasse durch Mischen von 220 g einer nach Beispiel 10 erhaltenen Epoxidharz-Lösung mit 38,5 g ®Beckopox EH 625, 40 g Kronos 2300 und 110 g Micro-Talkum 20 M 0 hergestellt. Die Schichtdicke wurde nach zweitägigem Trocknen bei 20 °C mit 1,9 mm ermittelt.
Die Beschichtung war deckend weiß und die Oberfläche des mit dieser Überzugsmasse versehenen Bleches glatt und rißfrei. Die Brandprüfung des beschichteten Bleches gemäß DIN 4102 ergab mindestens die Feuerwiderstandsklasse F 30. Die Beschichtung zeichnete sich bei dieser Prüfung durch ein sehr gutes Intumeszenzverhalten aus.

### Beispiel 20

Es wurde wie in Beispiel 12 verfahren, jedoch wurde die Überzugsmasse durch Mischen von 220 g einer nach Beispiel 11 erhaltenen Epoxidharz-Lösung mit 38,5 g ®Beckopox EH 625 und 45 g Kronos 2300 hergestellt. Die Schichtdicke wurde nach zweitägigem Trocknen bei 20 °C mit 1,7 mm ermittelt.
Die Beschichtung war deckend weiß und die Oberfläche des mit dieser Überzugsmasse versehenen Bleches glatt und rißfrei. Die Brandprüfung des beschichteten Bleches gemäß DIN 4102 ergab mindestens die Feuerwiderstandsklasse F 30. Die Beschichtung zeichnete sich bei dieser Prüfung durch ein sehr gutes Intumeszenzverhalten aus.

## Patentansprüche

1. Aufblähbare, halogenfreie flammhemmende Überzugsmasse aus Epoxidharzen, Polyphosphor-/Polyphosphonsäureestern und einem Härter, dadurch gekennzeichnet, daß sie 75 bis 95 Gewichtsteile Epoxidharz sowie 5 bis 25 Gewichtsteile Polyphosphor/Polyphosphonsäureester enthält und das Gesamtgewichtsverhältnis von Epoxidharz und Polyphosphor-/Polyphosphonsäureester zu Härter (1,1 bis 10) zu 1 beträgt.

2. Aufblähbare, halogenfreie flammhemmende Überzugsmasse nach Anspruch 1, dadurch gekennzeichnet, daß sie bis zu 65 Gewichtsteilen an weiteren Inhalts- und Füllstoffen enthält.

3. Aufblähbare, halogenfreie flammhemmende Überzugsmasse nach Anspruch 1 oder 2, dadurch gekennzeichnet, daß sie 0,05 bis 10 Gew.-% Phosphor enthält.

4. Aufblähbare, halogenfreie flammhemmende Überzugsmasse nach einem oder mehreren der Ansprüche 1 bis 3, dadurch gekennzeichnet, daß sie 2 bis 7 Gew.-% Phosphor enthält.

5. Verfahren zur Herstellung von aufblähbaren, halogenfreien flammhemmenden Überzugsmassen aus Epoxidharzen und Polyphosphor-/Polyphosphonsäureestern sowie einem Härter gemäß einem der Ansprüche 1 bis 4, dadurch gekennzeichnet, daß man in einem ersten Reaktionsschritt ein Epoxidharz mit dem Polyphosphor-/Polyphosphonsäureester umsetzt und das Reaktionsprodukt anschließend in einem zweiten Reaktionsschritt bei einer Temperatur von 0 bis 200 °C mit einem Härter in die Überzugsmasse überführt.

6. Verfahren nach Anspruch 5, dadurch gekennzeichnet, daß der erste Reaktionsschritt in einem Lösungsmittel erfolgt.

7. Verfahren nach Anspruch 6, dadurch gekennzeichnet, daß aprotische, polare lösungsmittel, wie N-methylpyrrolidon, Dimethylformamid, Tetrahydrofuran, Dioxan, Dialkylether, Glykolether, Ketone und/oder Ester eingesetzt werden.

8. Verfahren nach Anspruch 6, dadurch gekennzeichnet, daß als Lösungsmittel halogenierte Kohlenwasserstoffe, Aliphatische, cycloaliphatische und/oder aromatische Kohlenwasserstoffe, einzeln oder als Gemische, eingesetzt werden.

9. Verfahren nach einem oder mehreren der Ansprüche 6 bis 8, dadurch gekennzeichnet, daß die Umsetzung im ersten Reaktionsschritt bei Temperaturen zwischen -10 bis +200 °C erfolgt.

10. Verfahren nach Anspruch 9, dadurch gekennzeichnet, daß die Umsetzung bei Temperaturen von 20 bis 100 °C erfolgt.

11. Verfahren nach Anspruch 9, dadurch gekennzeichnet, daß die Umsetzung bei Temperaturen von 50 bis 80 °C erfolgt.

12. Verfahren nach einem oder mehreren der Ansprüche 6 bis 11, dadurch gekennzeichnet, daß die Umsetzung im zweiten Reaktionsschritt bei Temperaturen von 30 bis 150 °C erfolgt.

13. Verfahren nach Anspruch 12, dadurch gekennzeichnet, daß die Umsetzung bei Temperaturen von 70 bis 120 °C erfolgt.

14. Verwendung von Überzugsmassen nach einem oder mehreren der Ansprüche 1 bis 4 oder hergestellt nach einem oder mehreren der Ansprüche 5 bis 13 zur Herstellung von Überzügen.

15. Verwendung von Überzugsmassen nach Anspruch 14 zum Beschichten von Fußböden, Wänden oder Formteilen.

16. Verwendung nach Anspruch 15 oder 16 für die Beschichtung von Stahlträgern, Holz und holzähnliche Materialien, Kabeln und Rohren.

## Claims

1. An expandable, halogen-free, flame-retardant coating composition comprising epoxy resins, polyphosphoric/ polyphosphonic esters and a curing agent, which composition comprises from 75 to 95 parts by weight of epoxy resin and from 5 to 25 parts by weight of polyphosphoric/polyphosphonic ester, and wherein the overall weight ratio of epoxy resin and polyphosphoric/polyphosphonic ester to curing agent is (1.1 to 10) to 1.

2. An expandable, halogen-free, flame-retardant coating composition as claimed in claim 1, which comprises up to 65 parts by weight of further ingredients and fillers.

3. An expandable, halogen-free, flame-retardant coating composition as claimed in claim 1 or 2, which comprises from 0.05 to 10% by weight of phosphorus.

4. An expandable, halogen-free, flame-retardant coating composition as claimed in one or more of claims 1 to 3, which comprises from 2 to 7% by weight of phosphorus.

5. A process for preparing expandable, halogen-free, flame-retardant coating compositions comprising epoxy resins and polyphosphoric/polyphosphonic esters and a curing agent as claimed in one of claims 1 to 4, which comprises reacting, in a first reaction step, an epoxy resin with the polyphosphoric/polyphosphonic ester and then, in a second reaction step at a temperature from 0 to 200°C, converting the reaction product into the coating composition with a curing agent.

6. The process as claimed in claim 5, wherein the first reaction step is carried out in a solvent.

7. The process as claimed in claim 6, wherein aprotic polar solvents such as N-methylpyrrolidone, dimethylformamide, tetrahydrofuran, dioxane, dialkyl ethers, glycol ethers, ketones and/or esters are employed.

8. The process as claimed in claim 6, wherein the solvents employed are halogenated hydrocarbons or Aliphatic, cycloaliphatic and/or aromatic hydrocarbons, individually or as mixtures.

9. The process as claimed in one or more of claims 6 to 8, wherein the reaction in the first reaction step is carried out at temperatures of from -10 to +200°C.

10. The process as claimed in claim 9, wherein the reaction is carried out at temperatures from 20 to 100°C.

11. The process as claimed in claim 9, wherein the reaction is carried out at temperatures from 50 to 80°C.

12. The process as claimed in one or more of claims 6 to 11, wherein the reaction in the second reaction step is carried out at temperatures from 30 to 150°C.

13. The process as claimed in claim 12, wherein the reaction is carried out at temperatures from 70 to 120°C.

14. The use of a coating composition as claimed in one or more of claims 1 to 4 or prepared as claimed in one or more of claims 5 to 13 for producing coatings.

15. The use of a coating composition as claimed in claim 14 for coating floors, walls or shaped articles.

16. The use as claimed in claim 15 or 16 for the coating of steel supports, wood and wood-like materials, cables and pipes.

## Revendications

1. Composition de revêtement ignifuge, sans halogène et expansible constituée de résines époxy, d'esters d'acides polyphosphoriques/polyphosphoniques et d'un durcisseur, caractérisée en ce qu'elle contient 75 à 95 parties en masse de résine époxy et 5 à 25 parties en masse d'esters d'acides polyphosphoriques/polyphosphoniques et en ce que le rapport en masse totale de la résine époxy et des esters d'acides polyphosphoriques/polyphosphoniques au durcisseur est de (1,1 à 10) à 1.

2. Composition de revêtement ignifuge, sans halogène et expansible selon la revendication 1, caractérisée en ce qu'elle contient jusqu'à 65 parties en masse d'autres ingrédients et charges.

3. Composition de revêtement ignifuge, sans halogène et expansible selon la revendication 1 ou 2, caractérisée en ce qu'elle contient 0,05 à 10 % en masse de phosphore.

4. Composition de revêtement ignifuge, sans halogène et expansible selon l'une ou plusieurs des revendications 1 à 3, caractérisée en ce qu'elle contient 2 à 7 % en masse de phosphore.

5. Procédé de préparation de compositions de revêtement ignifuges, sans halogène et expansibles constituées de résines époxy et d'esters d'acides polyphosphoriques/polyphosphoniques, ainsi que d'un durcisseur, selon les revendications 1 à 4, caractérisées en ce que l'on fait réagir dans une première étape de réaction une résine époxy avec l'ester d'acide polyphosphorique/polyphosphonique, puis, dans une deuxième étape de réaction, à une température de 0 à 200°C, on transforme avec un durcisseur le produit de réaction en la composition de revêtement.

6. Procédé selon la revendication 5, caractérisé en ce que la première étape de réaction s'effectue dans un solvant.

7. Procédé selon la revendication 6, caractérisé en ce que l'on utilise des solvants aprotiques polaires comme la N-méthylpyrrolidone, le diméthylformamide, le tétrahydrofurane, le dioxane, des éthers dialkyliques, des éthers de glycol, des cétones et/ou des esters.

8. Procédé selon la revendication 6, caractérisé en ce que l'on utilise comme solvants des hydrocarbures halogénés, des hydrocarbures aliphatiques, cycloaliphatiques et/ou aromatiques, isolément ou sous forme de mélanges.

9. Procédé selon l'une ou plusieurs des revendications 6 à 8, caractérisé en ce que, dans la première étape réactionnelle, la réaction s'effectue à des températures comprises entre -10 et +200°C.

10. Procédé selon la revendication 9, caractérisé en ce que la réaction s'effectue à des températures de 20 à 100°C.

11. Procédé selon la revendication 9, caractérisé en ce que la réaction s'effectue à des températures de 50 à 80°C.

12. Procédé selon l'une ou plusieurs des revendications 6 à 11, caractérisé en ce que, dans la deuxième étape réactionnelle, la réaction s'effectue à des températures de 30 à 150°C.

13. Procédé selon la revendication 12, caractérisé en ce que la réaction s'effectue à des températures de 70 à 120°C.

14. Utilisation de compositions de revêtement selon l'une ou plusieurs des revendications 1 à 4 ou préparées selon l'une ou plusieurs des revendications 5 à 13 pour la préparation de revêtements.

15. Utilisation de compositions de revêtement selon la revendication 14 pour le revêtement de sols, de murs ou de pièces moulées.

16. Utilisation selon la revendication 15 ou 16 pour le revêtement de poutres métalliques, de bois et de matériaux analogues au bois, de câbles et de tubes.
